# EUROPÄISCHE PATENTANMELDUNG

(11) **EP 1 882 656 A1**
(43) Veröffentlichungstag der Anmeldung: **30.01.2008**
(21) Anmeldenummer: 07112209.7
(22) Anmeldetag: 11.07.2007
(51) Int. Cl.: B65H 5/26, B65H 29/60, G05B 19/00

(54) **Fertigungssystem zur Herstellung von bedruckten Produkten und Verfahren zum Transport der Produkte**

(30) Priorität: 26.07.2006 DE 102006034509; 26.07.2006 DE 102006034511; 28.06.2007 DE 102007030271
(71) Anmelder: Heidelberger Druckmaschinen Aktiengesellschaft, 69115 Heidelberg (DE)
(72) Erfinder: Frank, Hendrik, 41812, Erkelenz (DE)

(57) **Zusammenfassung**

Die Erfindung betrifft ein Fertigungssystem zur Herstellung von bedruckten Produkten aus Bogen aus Papier, Pappe und dergleichen mit mehreren Druckmaschinen (D1,D2,DN), mehreren Stanzmaschinen (S1,S2,SM) und einer gemeinsamen Steuereinheit.

Die Druckmaschinen (D1,D2,DN) sind mit den Stanzmaschinen (S1,S2,SM) über ein Transportsystem (T) mit linear angetriebenen Transportmitteln derart verbunden, dass die Produkte von einer jeweiligen Druckmaschine (D1,D2,DN) an eine beliebige Stanzmaschine (S1,S2,S3) gefördert werden können, wobei der Transportpfad der Produkte durch eine Steuereinheit gesteuert wird.

Die Steuereinheit optimiert die Auslastung aller Maschinen durch die Vorgabe der Produkttransportpfade.

Weiter betrifft die Erfindung ein Verfahren zur Steuerung des Transports der Produkte.

## Beschreibung

Die vorliegende Erfindung betrifft ein Fertigungssystem zur Herstellung von bedruckten Produkten gemäß dem Oberbegriff von Anspruch 1 und Anspruch 10 und ein Verfahren zur Steuerung des Transports von Produkten gemäß Anspruch 9.
Druck- und Stanzmaschinen sind Teil eines solchen Fertigungssystems.

Verpackungsmaterialien aus Papier, Karton, Pappe oder Wellpappe werden hauptsächlich auf Bogendruckmaschinen gedruckt, im Bogenformat gestanzt und ggf. zu Faltschachteln gefalzt und geklebt. Beim Stanzvorgang können zusätzlich auch Rilllinien oder Blindprägungen in den Nutzen eingebracht werden. Dieser komplexe Prozess macht es unabdingbar, die Bogen einzeln zu stanzen. Da es sich bei den Endprodukten um anspruchsvolle Verpackungen hinsichtlich technischer und graphischer Ausführung handelt (etwa Verpackungen für Kosmetik, Zigaretten, Pharmazie, Lebensmittel, etc.), werden besondere Anforderungen nicht nur an die Verpackungsmaterialien selbst gestellt, sondern es sind für optimale Resultate auch Stanzwerkzeuge mit geringsten Toleranzen und äußerst präzise und zuverlässig arbeitende Stanzmaschinen erforderlich.

Diesen Ansprüchen wird das Flachbettstanzen am besten gerecht. Dabei werden die gedruckten und auf einer Palette gestapelten Bogen der Stanzmaschine zugeführt. In der Vorrichtung werden in einer Ausrichteinrichtung die zu stanzenden Bogen passgenau ausgerichtet, von einem Greiferwagen übernommen und exakt in der Stanzeinrichtung zwischen einem fest gelagerten Untertisch und einem über einen Kniehebel oder Exzentergetriebe vertikal bewegbaren Obertisch positioniert.

Eine derartige Flachbettstanze ist beispielsweise aus der DE 30 44 083 A1 bekannt. Die beiden Tische sind mit Schneid- und Rillwerkzeugen bzw. entsprechenden Gegenwerkzeugen bestückt, mit denen aus dem taktweise zwischen die Tischfläche geführten Bögen die Nutzen ausgestanzt und gleichzeitig die zum sauberen Falten notwendigen Rillen eingedrückt werden. In der nachfolgenden Ausbrecheinrichtung wird der Abfall über Ausbrechwerkzeuge maschinell entfernt. Je nach Ausstattung der Maschine können schließlich die gestanzten Nutzen in einer hierfür vorgesehenen Nutzentrenneinrichtung separiert werden.

Fertigungssysteme zur Herstellung von bedruckten Produkten bestehen nach dem Stand der Technik aus Druck- und Stanzmaschinen ohne direkte Materialflussverkettung. Dies erfordert ein Auslagern nach dem Drucken, üblicher Weise auf Paletten, einen Stapeltransport, üblicher Weise mittels Palettenhubwagen, Zwischenlagern und anschließendes neues Anlegen in die Stanze. Dieses Vorgehen ist auf Grund der dabei entstehenden Makulatur, des erforderlichen Platzbedarfes für Lagerflächen und des Personal- und Zeitaufwandes nachteilig.

Weiterhin sind Rotationsstanzen bekannt. Bei diesen sind die Stanzwerkzeuge auf Messerwellen angebracht, die sich in der Druckmaschine befinden. Nachteilig an dieser Lösung ist die Beschränkung der Materialdicke auf etwa 0,5mm, eine geringe Stanzkraft und die eingeschränkte Formgebung. Weitere Schwierigkeiten bestehen beim Ausbrechen des Abfalls.

Aufgabe der vorliegenden Erfindung ist es ein Fertigungssystem zu beschreiben, das die beschriebenen Nachteile des Standes der Technik behebt.

Gelöst wird diese Aufgabe durch ein Verfahren gemäß Anspruch 9 und durch ein Fertigungssystem mit den kennzeichnenden Merkmalen von Anspruch 1 und Anspruch 10.

Ein erfindungsgemäßes Fertigungssystem zur Herstellung von bedruckten Produkten aus Bogen aus Papier, Pappe und dergleichen, insbesondere von Faltschachteln, besitzt mehrere Druckmaschinen, mehrere Stanzmaschinen und mindestens eine Steuereinheit. Die Maschinen können ausschließlich eine gemeinsame Steuereinheit besitzen oder zusätzlich zu einer gemeinsamen Steuereinheit jeweils über eine eigene Steuereinheit verfügen. Die Druckmaschinen sind mit den Stanzmaschinen über ein Transportsystem so verbunden, dass die Produkte von einer jeweiligen Druckmaschine an eine beliebige Stanzmaschine gefördert werden können. Der Transportpfad der Produkte wird dabei durch die gemeinsame Steuereinheit gesteuert. In einer weiteren vorteilhaften Ausführungsform des Fertigungssystems besitzt dieses zusätzlich mehrere Faltschachtelklebemaschinen. Druckmaschinen, Stanzmaschinen und Faltschachtelklebemaschinen sind so über ein Transportsystem miteinander verbunden, dass die Produkte von einer jeweiligen Druckmaschine an eine beliebige Stanzmaschine und von einer jeweiligen Stanzmaschine an eine beliebige Faltschachtelklebemaschine gefördert werden können. Der Transportpfad der Produkte wird dabei durch die gemeinsame Steuereinheit gesteuert.

In einer weiteren vorteilhaften Ausführungsform des Fertigungssystems ist jeder Druckmaschine eine separate nachfolgende Bearbeitungsstation zugeordnet. Bei den Bearbeitungsstationen kann es sich insbesondere um Trockenstationen handeln. Das Transportsystem verbindet in vorteilhafter Weise eine jeweilige Druckmaschine mit der zugeordneten Bearbeitungsstation und eine jeweilige Bearbeitungsstation mit einer beliebigen Stanzmaschine. Der Transportpfad der Produkte von Bearbeitungsstation zur Stanzmaschine wird dabei ebenfalls durch die gemeinsame Steuereinheit gesteuert.

In einer vorteilhaften Ausführungsform besitzt das Fertigungssystem Transportmittel zum Transport der Produkte, wobei die leeren Transportmittel von einer jeweiligen Stanzmaschine zu einer beliebigen Druckmaschine auf einem Transportpfad gefördert werden können. Der Transportpfad der Transportmittel wird dabei durch die gemeinsame Steuereinheit gesteuert.

In einer vorteilhaften und daher bevorzugten Ausführungsform optimiert die Steuereinheit des Fertigungssystems durch die Vorgabe der Produkttransportpfade die Auslastung aller Maschinen. Dazu ist in der Steuereinheit ein Optimierungsalgorithmus hinterlegt.

In einer vorteilhaften und daher bevorzugten Ausführungsform des Fertigungssystems besitzt dessen Transportsystem linear angetriebene Transportmittel. In einer ersten Variante sind die Transportmittel durch Wagen zur Aufnahme von Paletten gebildet, wobei auf jeder Palette ein Stapel von Produkten transportiert werden kann. In einer zweiten Variante sind die Transportmittel durch Greiferwagen gebildet, wobei durch einen Greiferwagen ein einzelner Bogen transportiert werden kann. In verschiedenen Ausführungsformen können die Greiferwagen durch Druckmaschinen und / oder Bearbeitungsstationen und / oder Stanzmaschinen hindurch bewegt werden. In einer besonders vorteilhaften Ausführungsform übernehmen die Greiferwagen Bogen im Anlegerbereich der jeweiligen Druckmaschinen, transportieren die Bogen durch die Druckmaschinen und weiter durch die Stanzmaschinen und übergeben die Bogen an Faltschachtelklebemaschinen. Die leeren Greiferwagen werden wieder zurück zu den Druckmaschinen transportiert.

Teil der Erfindung ist auch ein Verfahren zur Steuerung des Transports von bedruckten Produkten aus Bogen aus Papier, Pappe und dergleichen in einem Fertigungssystem bestehend aus mehreren Druckmaschinen und mehreren Stanzmaschinen. In einem ersten Schritt werden die Auftragsdaten der im Fertigungssystem zu fertigenden Produkte von der Steuerung des Fertigungssystems abgefragt. Danach wird die momentane Auslastung aller Druckmaschinen und Stanzmaschinen an die Steuerung des Fertigungssystems gemeldet. Basierend auf diesen Daten wird die mittelfristige Auslastung aller Druckmaschinen und Stanzmaschinen durch die Steuerung des Fertigungssystems berechnet. Die Steuerung des Fertigungssystems berechnet nun Transportpfade für die Produkte von einer jeweiligen Druckmaschine zu einer Stanzmaschine. Die Berechnung der mittelfristigen Auslastung der Transportpfade für die Produkt erfolgt mittels eines Optimierungsalgorithmus, wobei die Berechnungen so lange wiederholt werden, bis für die Gesamtauslastung aller Maschinen ein Maximum gefunden ist. Entsprechend den so gefundenen Transportpfaden werden die Weichen des Transportsystems des Fertigungssystems geschaltet und die Produkte werden durch Transportmittel entlang dieser Transportpfade transportiert.

Teil der Erfindung ist auch ein alternatives Fertigungssystems zur Herstellung von Druckweiterverarbeitungsprodukten aus Bogen aus Papier, Pappe und dergleichen mit einer Druckmaschine und einer Stanzmaschine. Die Maschinen sind über ein Transportsystem miteinander verbunden, welches über linear angetriebene Transportmittel, insbesondere Greiferwagen, verfügt.

Hinsichtlich weiterer vorteilhafter Ausgestaltungen der Erfindung wird auf die Unteransprüche sowie die Beschreibung eines Ausführungsbeispiels unter Bezugnahme auf die beiliegenden Zeichnungen verwiesen.

### Ausführungsbeispiel

Die Erfindung soll an Hand eines Ausführungsbeispiels noch näher erläutert werden. Es zeigen in schematischer Darstellung
- Fig. 1: ein mittels Palettenwagen verbundenes Fertigungssystem mit Druck- und Stanzmaschinen
- Fig. 2: ein mittels Greiferwagen verbundenes Fertigungssystem mit Druck- und Stanzmaschinen und Bearbeitungsstationen
- Fig. 3: ein mittels Greiferwagen verbundenes Fertigungssystem mit Druck- und Stanzmaschinen
- Fig. 4: ein mittels Greiferwagen verbundenes Fertigungssystem mit Druck-, Stanz und Faltschachtelklebemaschinen

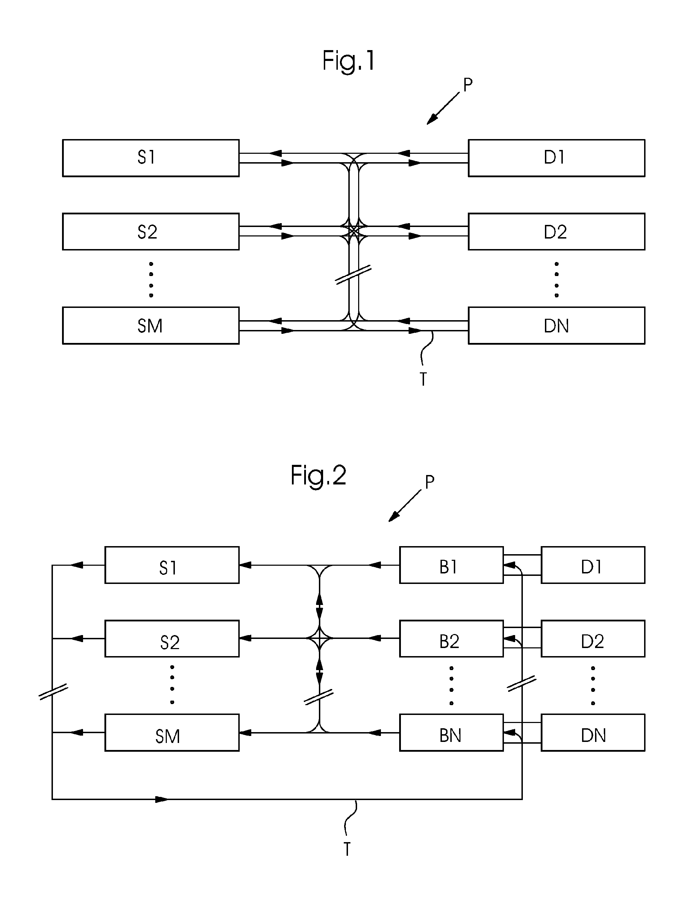

Fig. 1 zeigt ein Fertigungssystem P mit mehreren Druckmaschinen D1, D2 bis DN und mehreren Stanzmaschinen S1, S2 bis SM. Die Druckmaschinen D1, D2, DN sind über ein Transportsystem T mit den Stanzmaschinen S1, S2, SM verbunden. Am Ausleger (nicht dargestellt) einer jeweiligen Druckmaschine D1, D2, DN werden die Produkte (nicht dargestellt) auf Paletten gestapelt. Die Paletten werden durch ein Transportmittel aufgenommen und können über das Transportsystem T zu einer beliebigen Stanzmaschine S1, S2, SM transportiert werden. Dort fahren die Paletten mit den Produktstapeln in den Anlegerbereich einer jeweiligen Stanzmaschine S1, S2, SM ein. Die Auswahl der Transportpfade durch das Transportsystem T und die Ansteuerung der Weichen des Transportsystems T geschieht durch eine nicht dargestellte Steuereinheit.

Fig. 2 zeigt ein Fertigungssystem P mit Druckmaschinen D1, D2, DN und Bearbeitungsstationen B1, B2, BN. Einer jeden Druckmaschine ist dabei eine Bearbeitungsstation zugeordnet. Weiterhin verfügt das Fertigungssystem P über Stanzmaschinen S1, S2 bis SM. Das Transportsystem T verbindet eine jeweilige Druckmaschine mit ihrer zugehörigen Bearbeitungsstation, d. h., D1 mit B1, D2 mit B2, usw. und DN mit BN. Eine jede Bearbeitungsstation B1, B2, BN ist über das Transportsystem T mit jeder Stanzmaschine S1, S2, SM verbunden. Das Transportsystem T verfügt über nicht dargestellte Transportmittel, welche als linear angetriebene Greiferwagen ausgebildet sind. Ein jeweiliger Greiferwagen übernimmt aus einer Druckmaschine einen Bogen, transportiert diesen durch die der Druckmaschine zugeordnete Bearbeitungsstation und weiter zu einer beliebigen Stanze, durch diese hindurch und legt das gestanzte Produkt auf einem Stapel ab. Der leere Greiferwagen kann über das Transportsystem T auf einem separaten Transportpfad zu den Druckmaschinen zurücktransportiert werden. Die Auswahl der Transportpfade durch das Transportsystem T und die Ansteuerung der Weichen des Transportsystems T geschieht durch eine nicht dargestellte Steuereinheit.

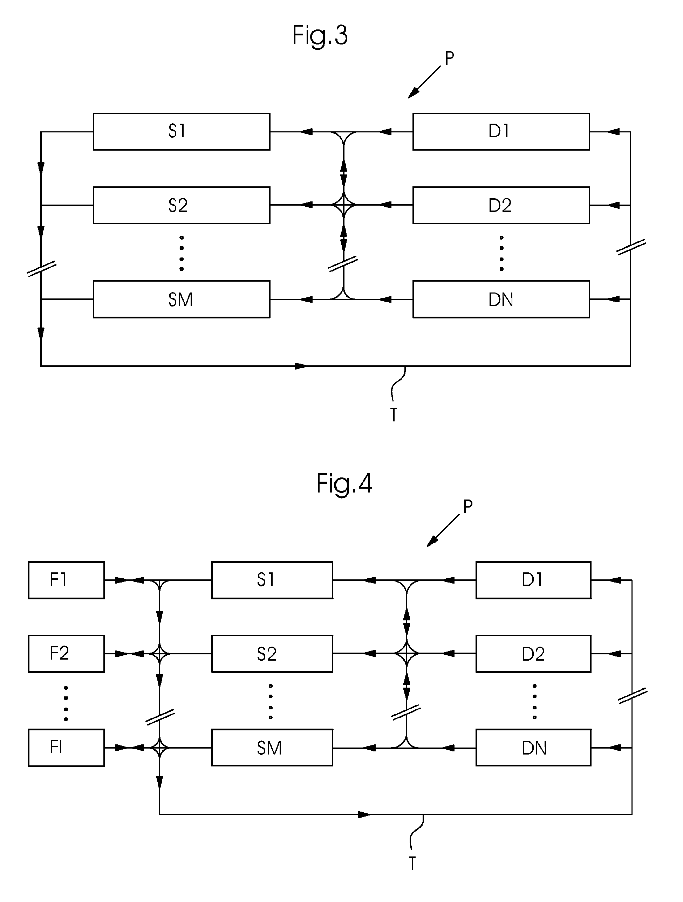

Fig. 3 zeigt ein Fertigungssystem P mit Druckmaschinen D1, D2 bis DN und Stanzmaschinen S1, S2 bis SM. Die Druckmaschinen sind über ein Transportsystem T mit den Stanzmaschinen verbunden. Das Transportsystem verfügt über nicht dargestellte, linear angetriebene Transportmittel, welche als Greiferwagen ausgebildet sind. Die Greiferwagen können jeweils einen Bogen ergreifen, diesen Durch die Druckmaschine hindurch, weiter zu einer beliebigen Stanzmaschine und durch diese hindurch transportieren. Nachdem das gestanzte Produkt auf einem Stapel abgelegt wurde kann der leere Greiferwagen von einer jeweiligen Stanzmaschine zu einer beliebigen Druckmaschine auf einem separaten Transportpfad zurück transportiert werden. Die Auswahl der Transportpfade durch das Transportsystem T und die Ansteuerung der Weichen des Transportsystems T geschieht durch eine nicht dargestellte Steuereinheit.

Fig. 4 zeigt ein Fertigungssystem P ähnlich dem Fertigungssystem aus Fig. 3. Zusätzlich verfügt das Fertigungssystem P jedoch über Faltschachtelklebemaschinen F1, F2 bis FI, welche über das Transportsystem T mit den Stanzmaschinen S1, S2 bis SM verbunden sind. Ein gestanztes Produkt kann so von einer jeweiligen Stanzmaschine S1, S2, SM durch die Transportmittel (nicht dargestellt) des Transportsystems T einer beliebigen Faltschachtelklebemaschine F1, F2, FI zugeführt werden. Die Auswahl der Transportpfade durch das Transportsystem T und die Ansteuerung der Weichen des Transportsystems T geschieht durch eine nicht dargestellte Steuereinheit.

### Bezugszeichenliste

- P: Fertigungssystem
- T: Transportsystem

- S1: Stanzmaschine 1
- S2: Stanzmaschine 2
- SM: Stanzmaschine M

- D 1: Druckmaschine 1
- D2: Druckmaschine 2
- DN: Druckmaschine N

- B1: Bearbeitungsstation 1
- B2: Bearbeitungsstation 2
- BN: Bearbeitungsstation N

- F1: Faltschachtelklebemaschine 1
- F2: Faltschachtelklebemaschine 2
- FI: Faltschachtelklebemaschine I

## Patentansprüche

1. Fertigungssystem (P) zur Herstellung von bedruckten Produkten aus Bogen aus Papier, Pappe und dergleichen mit mehreren Druckmaschinen (D1, D2, DN), mehreren Stanzmaschinen (S1, S2, SM) und mindestens einer Steuereinheit,
**dadurch gekennzeichnet,**
**dass** die Druckmaschinen (D1, D2, DN) mit den Stanzmaschinen (S1, S2, SM) über ein Transportsystem (T) derart verbunden sind, dass die Produkte von einer jeweiligen Druckmaschine (D1, D2, DN) an eine beliebige Stanzmaschine (S1, S2, SM) gefördert werden können, wobei der Transportpfad der Produkte durch die Steuereinheit gesteuert wird.

2. Fertigungssystem nach Anspruch 1,
**dadurch gekennzeichnet,**
**dass** das Fertigungssystem (P) mehrere Faltschachtelklebemaschinen (F1, F2, FI) besitzt wobei die Stanzmaschinen (S1, S2, SM) mit den Faltschachtelklebemaschinen (F1, F2, FI) über ein Transportsystem (T) derart verbunden sind, dass die Produkte von einer jeweiligen Stanzmaschine (S1, S2, SM) an eine beliebige Faltschachtelklebemaschine (F1, F2, FI) gefördert werden können, wobei der Transportpfad der Produkte durch die Steuereinheit gesteuert wird.

3. Fertigungssystem nach einem der Ansprüche 1 bis 2,
**dadurch gekennzeichnet,**
**dass** jeder Druckmaschine (D1, D2, DN) eine separate nachfolgende Bearbeitungsstation (B 1, B2, BN) zugeordnet ist, insbesondere eine Trockenstation, wobei das Transportsystem (T) eine jeweilige Druckmaschine (D1, D2, DN) mit der zugeordneten Bearbeitungsstation (B 1, B2, BN) verbindet und wobei die Bearbeitungsstationen (B1, B2, BN) mit den Stanzmaschinen (S1, S2, SM) über das Transportsystem (T) verbunden sind.

4. Fertigungssystem nach einem der Ansprüche1 bis 3,
**dadurch gekennzeichnet,**
**dass** das Fertigungssystem (P) Transportmittel zum Transport der Produkte besitzt und die leeren Transportmittel von einer jeweiligen Stanzmaschine (S1, S2, SM)zu einer beliebigen Druckmaschine (D1, D2, DN) auf einem Transportpfad gefördert werden können, wobei der Transportpfad der Transportmittel durch eine Steuereinheit gesteuert wird.

5. Fertigungssystem nach einem der Ansprüche 1 bis 4,
**dadurch gekennzeichnet,**
**dass** die Steuereinheit die Auslastung aller Maschinen (D1, D2, DN; B1, B2, BN; S1, S2, SM; F1, F2, FI) durch die Vorgabe der Transportpfade optimiert.

6. Fertigungssystem nach einem der Ansprüche 1 bis 5,
**dadurch gekennzeichnet,**
**dass** das Transportsystem (T) linear angetriebene Transportmittel besitzt

7. Fertigungssystem nach Anspruch 6,
**dadurch gekennzeichnet,**
**dass** die Transportmittel durch Wagen zur Aufnahme von Paletten gebildet werden, wobei auf einer jeweiligen Palette ein Stapel von Bogen transportiert werden kann.

8. Fertigungssystem nach Anspruch 6,
**dadurch gekennzeichnet,**
**dass** die Transportmittel durch Greiferwagen gebildet werden, wobei durch einen jeweiligen Greiferwagen ein einzelner Bogen transportiert werden kann.

9. Fertigungssystem nach Anspruch 8,
**dadurch gekennzeichnet,**
**dass** die Greiferwagen durch Druckmaschinen (D1, D2, DN) und / oder Bearbeitungsstation (B 1, B2, BN) und / oder Stanzmaschinen (S 1, S2, SM) hindurch bewegbar sind.

10. Verfahren zur Steuerung des Transports von bedruckten Produkten aus Bogen aus Papier, Pappe und dergleichen in einem Fertigungssystem (P), insbesondere eines Fertigungssystems nach Anspruch 1, bestehend aus mehreren Druckmaschinen (D1, D2, DN) und mehreren Stanzmaschinen (S1, S2, SM),
**gekennzeichnet durch** nachfolgende Schritte:
a) die Auftragsdaten der im Fertigungssystem (P) zu fertigenden Produkte werden von der Steuerung des Fertigungssystems abgefragt
b) die momentane Auslastung aller Druckmaschinen (D1, D2, DN) und Stanzmaschinen (S1, S2, SM) wird an die Steuerung des Fertigungssystem gemeldet
c) die mittelfristige Auslastung aller Druckmaschinen (D1, D2, DN) und Stanzmaschinen (S1, S2, SM) wird **durch** die Steuerung des Fertigungssystems berechnet
d) die Steuerung des Fertigungssystem berechnet Transportpfade für die Produkte von einer jeweiligen Druckmaschine (D1, D2, DN) zu einer Stanzmaschine (S1, S2, SM)
e) Schritte c) und d) werden solange wiederholt, bis für die Gesamtauslastung aller Maschinen ein Maximum gefunden ist
f) die Weichen des Transportsystems (T) des Fertigungsystems (P) werden entsprechend geschaltet
g) die Produkte werden **durch** Transportmittel, insbesonders linearangetriebene Transportmittel, entlang der berechneten Transportpfade transportiert.

11. Fertigungssystem (P) zur Herstellung von Druckweiterverarbeitungsprodukten aus Bogen aus Papier, Pappe und dergleichen mit einer Druckmaschine (D1) und einer Stanzmaschine (S1),
**dadurch gekennzeichnet,**
**dass** die Druckmaschine (D1) mit der Stanzmaschine (S1) über ein Transportsystem (T) verbunden ist, wobei das Transportsystem (T) über linear angetriebene Transportmittel verfügt.
